# EUROPÄISCHE PATENTANMELDUNG

(11) **EP 2 827 207 A1**
(43) Veröffentlichungstag der Anmeldung: **21.01.2015**
(21) Anmeldenummer: 13176454.0
(22) Anmeldetag: 15.07.2013
(51) Int. Cl.: G05B 19/418, H04L 12/26, H04L 12/851, H04L 12/40, H04L 29/06

(54) **Verfahren zur Übermittlung von Datenrahmen mittels eines Kommunikationsgeräts eines industriellen Automatisierungssystems und Kommunikationsgerät**

(71) Anmelder: Siemens Aktiengesellschaft, 80333 München (DE)
(72) Erfinder: Götz, Franz-Josef, 91180 Heideck (DE); Kießling, Marcel, 90556 Cadolzburg (DE); Klotz, Dieter, 90768 Fürth (DE)

(57) **Zusammenfassung**

Zur Übermittlung von Datenrahmen mittels eines Kommunikationsgeräts eines industriellen Automatisierungssystems, bei dem mittels des Kommunikationsgeräts zu übermittelnden Datenrahmen jeweils eine Übermittlungspriorität zugeordnet ist, wird für über zumindest einen ausgewählten Anschluss des Kommunikationsgeräts übermittelte Datenrahmen, die eine über einem vorgebbaren Prioritätsschwellwert liegende Übermittlungspriorität aufweisen, eine übermittelte Datenmenge erfasst. Die übermittelte Datenmenge wird periodisch innerhalb zumindest eines Überwachungszyklus erfasst. Die für jeden Überwachungszyklusdurchlauf erfasste Datenmenge wird auf eine Überschreitung eines vorgebbaren Mengenschwellwerts überprüft. Der ausgewählte Anschluss wird bei einer Überschreitung des Mengenschwellwerts für einen Überwachungszyklusdurchlauf während einer Sperrzeit bis zu einem Ende des jeweiligen Überwachungszyklusdurchlaufs gegen eine Übermittlung von Datenrahmen mit einer über dem Prioritätsschwellwert liegenden Übermittlungspriorität gesperrt.

## Beschreibung

Verfahren zur Übermittlung von Datenrahmen mittels eines Kommunikationsgeräts eines industriellen Automatisierungssystems und Kommunikationsgerät

Ein industrielles Automatisierungssystem umfaßt üblicherweise eine Vielzahl von über ein industrielles Kommunikationsnetz miteinander vernetzten Automatisierungsgeräten und dient im Rahmen einer Fertigungs- oder Prozeßautomatisierung zur Steuerung oder Regelung von Anlagen, Maschinen bzw. Geräten. Aufgrund zeitkritischer Rahmenbedingungen in mittels industrieller Automatisierungssysteme automatisierten technischen Systemen werden in industriellen Kommunikationsnetzen zur Kommunikation zwischen Automatisierungsgeräten überwiegend Echzeit-Kommunikationsprotokolle, wie Profinet, Profibus oder Real-Time-Ethernet, verwendet.

Unterbrechungen von Kommunikationsverbindungen zwischen Rechnereinheiten eines industriellen Automatisierungssystems oder Automatisierungsgeräten können zu einer unerwünschten oder unnötigen Wiederholung einer Übermittlung einer Dienstanforderung führen. Dies verursacht eine zusätzliche Auslastung von Kommunikationsverbindungen des industriellen Automatisierungssystems, was zu weiteren Systemstörungen oder -fehlern führen kann. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

Aufgrund einer Nutzung für häufig äußerst unterschiedliche Anwendungen können in Ethernet-basierten Kommunikationsnetzen beispielsweise Probleme entstehen, wenn Netzressourcen für eine Übermittlung kurzer Datenrahmen mit Echtzeitanforderungen konkurrierend für eine Übermittlung von Datenrahmen mit großem Nutzdateninhalt beansprucht werden. Dies kann zu einer verzögerten Übermittlung der Datenrahmen mit Echtzeitanforderungen oder sogar zu einem Verlust einzelner solcher Datenrahmen führen.

Eine priorisierte Übermittlung von Datenrahmen ist beispielsweise auf Grundlage von Virtual Local Area Networks (VLAN) entsprechend Standard IEEE 802.1Q grundsätzlich mittels entsprechender in Datenrahmen eingefügter Tags möglich. Zur synchronisierten und priorisierten Übertragung von Audio- und Videodatenströmen (audio/video bridging) über Kommunikationsnetze ist entsprechend Standard IEEE 802.1Qav eine Bandbreitenreservierung für einzelne Kommunikationsverbindungen vorgesehen, denen eine höchste Priorität zugeordnet ist. Für eine Übertragung von Audio- und Videodatenströmen benötigte Ressourcen werden dabei in Kommunikationsgeräten wie Switches reserviert. Eine Weiterleitung hochpriorisierter Datenrahmen erfolgt jedoch erst nach einer erfolgreichen Reservierung. Im Rahmen einer Bandbreitenüberwachung wird sichergestellt, daß hinsichtlich tatsächlich genutzter Bandbreite ausreichend reservierte Bandbreite vorliegt. Eine Kommunikationsverbindung, die mehr Bandbreite nutzt als reserviert ist, würde ansonsten zu einer Störung eines gesamten Kommunikationsnetzes führen, im ungünstigsten Fall zu dessen Stillstand aufgrund Überlastung.

Für die gesicherte Übertragung von Audio- und Videodatenströmen über Ethernet-basierte Kommunikationsnetze ist entsprechend Standard IEEE 802.1 Qbv sind credit-based shaper (CBS) als Maß für eine Bandbreitenüberwachung definiert worden. Durch credit-based shaper wird nach jedem übertragenen Datenrahmen eine Übertragungspause definiert, um eine Bandbreitenbegrenzung in bezug auf eine reservierte Bandbreite sicherzustellen. Derartige Zwangspausen sind jedoch in industriellen Automatisierungssystemen bei einer Übertragung von vielen Datenrahmen mit geringem Nutzdateninhalt für Steuerungsdaten, die eher als Datenbündel bzw. bursts anzusehen sind, äußerst problematisch. Steuerungsdaten müssen nämlich üblicherweise innerhalb eines Bearbeitungszyklus übertragen und verarbeitet werden. Beispielsweise werden zu Beginn eines Bearbeitungszyklus von sämtlichen Sensoren Steuerungsdaten an eine zugeordnete speicherprogrammierbare Steuerung gesendet. Nach einer anschließenden Berechnung auf Basis von den Sensoren empfangener Steuerungsdaten sendet die speicherprogrammierbare Steuerung Steuerungsdaten an Aktoren des industriellen Automatisierungssystems. Danach erfolgt innerhalb eines nächsten Bearbeitungszyklus eine erneute Sensordatenabfrage. Damit ausreichend Zeit für eine Verarbeitung von Steuerungsdaten innerhalb eines Bearbeitungszyklus verbleibt, sollten Datenrahmen mit Steuerungsdaten möglichst zu Beginn eines Bearbeitungszyklus übertragen werden, insbesondere bei Verwendung dezentraler Peripheriegeräte oder dezentraler Ein- und Ausgabeeinheiten.

Der vorliegenden Erfindung liegt die Aufgabe zugrunde, ein Verfahren zur Übermittlung von Datenrahmen mittels eines Kommunikationsgeräts eines industriellen Automatisierungssystems anzugeben, das eine effiziente Ausnutzung von für priorisiert zu übermittelnde Datenrahmen reservierten Ressourcen ermöglicht, sowie ein zur Durchführung des Verfahrens geeignetes Kommunikationsgerät anzugeben.

Diese Aufgabe wird erfindungsgemäß durch ein Verfahren mit den in Anspruch 1 angegebenen Merkmalen und durch ein Kommunikationsgerät mit den in Anspruch 12 angegebenen Merkmalen gelöst. Vorteilhafte Weiterbildungen des erfindungsgemäßen Verfahrens sind in den abhängigen Ansprüchen angegeben. Entsprechend dem erfindungsgemäßen Verfahren zur Übermittlung von Datenrahmen mittels eines Kommunikationsgeräts eines industriellen Automatisierungssystems ist mittels des Kommunikationsgeräts zu übermittelnden Datenrahmen jeweils eine Übermittlungspriorität zugeordnet. Die Übermittlungspriorität kann beispielsweise anhand von Merkmalen eines Datenrahmens, wie verwendeter Ethertype, zugeordnet werden. Das Kommunikationsgerät kann beispielsweise ein Switch oder eine Bridge sein und in einem als Store and Forward bezeichneten Übertragungsmodus betrieben werden. Für über zumindest einen ausgewählten Anschluß des Kommunikationsgeräts übermittelte Datenrahmen, die eine über einem vorgebbaren Prioritätsschwellwert liegende Übermittlungspriorität aufweisen, wird eine übermittelte Datenmenge erfaßt. Übermittelte Datenrahmen können sowohl gesendete Datenrahmen als auch empfangene Datenrahmen sein. Die übermittelte Datenmenge wird periodisch innerhalb zumindest eines Überwachungszyklus erfaßt, wobei der Überwachungszyklus vorzugsweise eine Vielzahl von Datenrahmen umfaßt. Dabei kann die übermittelte Datenmenge beispielsweise innerhalb eines (quasi-)kontinuierlichen Wertebereichs oder mittels eines Zählers in Wertestufen erfaßt werden. Zusätzlich kann die erfaßte Datenmenge für eine einfache Bandbreitenüberwachung auf eine Dauer des Überwachungszyklus normiert werden.

Darüber hinaus wird die für jeden Überwachungszyklusdurchlauf erfaßte Datenmenge entsprechend dem erfindungsgemäßen Verfahren auf eine Überschreitung eines vorgebbaren Mengenschwellwerts überprüft. Bei einer Überschreitung des Mengenschwellwerts wird der ausgewählte Anschluß für einen Überwachungszyklusdurchlauf während einer Sperrzeit bis zu einem Ende des jeweiligen Überachungszyklusdurchlaufs gegen eine Übermittlung von Datenrahmen mit einer über dem Prioritätsschwellwert liegenden Übermittlungspriorität gesperrt. Eine Datenmengenerfassung bzw. -begrenzung kann sowohl auf am Kommunikationsgerät eingehende Datenrahmen als auch auf ausgehende Datenrahmen gerichtet sein. Da eine Datenmengenerfassung erfindungsgemäß innerhalb zumindest eines Überwachungszyklus erfolgt, der eine Vielzahl von Datenrahmen umfassen kann, können unnötige Zwangspausen nach Datenrahmen mit geringem Nutzdateninhalt im Rahmen einer Bandbreitenüberwachung bzw. - begrenzung vermieden werden, so daß eine im wesentlichen verzögerungsfrei Übermittlung kurzer Datenrahmen mit Echtzeitanforderungen gewährleistet ist. Außerdem ermöglicht eine Vermeidung unnötiger Zwangspausen eine effizientere Ressourcennutzung innerhalb eines industriellen Kommunikationsnetzes.

Entsprechend einer besonders bevorzugten Ausgestaltung des erfindungsgemäßen Verfahren werden während der Sperrzeit am Kommunikationsgerät empfangene Datenrahmen verworfen, die für den ausgewählten Anschluß bestimmt sind und eine über dem Prioritätsschwellwert liegende Übermittlungspriorität aufweisen. Vorzugsweise werden während der Sperrzeit nur Datenrahmen übermittelt, die eine unter dem Prioritätsschwellwert liegende Übermittlungspriorität aufweisen. Damit wird eine Blockierung niedrigpriorisierten Datenverkehrs durch hochpriorisierten Datenverkehr vermieden.

Vorteilhafterweise wird die übermittelte Datenmenge entsprechend einer weiteren Ausgestaltung der vorliegenden Erfindung periodisch innerhalb zumindest eines ersten Überwachungszyklus und eines gegenüber diesem zeitversetzten zweiten Überwachungszyklus erfaßt, also innnerhalb mehrerer Überwachungszyklen. Dabei umfassen die zueinander zeitversetzten Überwachungszyklen jeweils eine Vielzahl von Datenrahmen. Durch eine Datenmengenüberwachung im Rahmen mehrerer zueinander zeitlich versetzter Datenrahmen kann Wissen über einen bereits erfolgten, zurückliegenden Bandbreitenverbrauch für eine genauere und selektivere Bandbreitenbegrenzung genutzt werden.

Grundsätzlich kann die erfaßte Datenmenge jeweils zu Beginn eines jeden Überwachungszyklusdurchlaufs zurückgesetzt werden. Alternativ dazu kann die erfaßte Datenmenge über sämtliche Überwachungszyklusdurchläufe kontinuierlich fortgeschrieben werden. In diesem Fall wird für jeden Überwachungszyklusdurchlauf jeweils eine aktuell erfaßte Datenmenge auf Überschreitung eines angepaßten Mengenschwellwerts überwacht wird, der aus einer Summe des vorgebbaren Mengenschwellwerts und einer zu Beginn des jeweiligen Überwachungszyklusdurchlaufs erfaßten Datenmenge gebildet wird. Dies ermöglicht eine besonders einfache Realisierung, da im Rahmen einer Datenmengenüberwachung lediglich für einen späteren Vergleich herangezogene Anfangswerte zu Beginn eines Überwachungszyklusdurchlaufs temporär zu speichern sind.

Entsprechend einer alternativen Ausgestaltung des erfindungsgemäßen Verfahrens wird die übermittelte Datenmenge anstelle einer periodischen Erfassung innerhalb zumindest eines Überwachungszyklus innerhalb eines zeitlich stetig verschobenen Überwachungsintervalls erfaßt. In analoger Weise umfaßt dabei das Überwachungsintervall vorzugsweise eine Vielzahl von Datenrahmen. Dementsprechend wird die innerhalb des zeitlich stetig verschobenen Überwachungsintervalls erfaßte Datenmenge auf eine Überschreitung des vorgebbaren Mengenschwellwerts überprüft. Bei einer Überschreitung des Mengenschwellwerts wird der ausgewählte Anschluß auch entsprechend der alternativen Ausgestaltung des erfindungsgemäßen Verfahrens während einer vorgebbaren Sperrzeit gegen eine Übermittlung von Datenrahmen mit einer über dem Prioritätsschwellwert liegenden Übermittlungspriorität gesperrt. Vorzugsweise umfaßt die erfaßte Datenmenge dabei nur innerhalb des zeitlich stetig verschobenen Überwachungsintervalls übermittelte Datenrahmen. Das Überwachungsintervall kann zeitlich kontinuierlich oder in diskreten Zeitabständen verschoben werden.

Das erfindungsgemäße Kommunikationsgerät für ein industrielles Automatisierungssystem zur Durchführung eines Verfahrens entsprechend vorangehenden Ausführungen umfaßt mehrere Anschlüsse für eine Verbindung mit innerhalb eines industriellen Kommunikationsnetzes miteinander verbundenen Kommunikationsgeräten sowie ein Anschlüsse miteinander verbindendes Koppelelement. Mittels des Kommunikationsgeräts zu übermittelnden Datenrahmen ist jeweils eine Übermittlungspriorität zugeordnet, beispielsweise anhand von Merkmalen eines Datenrahmens, wie verwendeter Ethertype. Das erfindungsgemäße Kommunikationsgerät ist dafür ausgestaltet und eingerichtet ist, daß für über zumindest einen ausgewählten Anschluß des Kommunikationsgeräts übermittelte Datenrahmen, die eine über einem vorgebbaren Prioritätsschwellwert liegende Übermittlungspriorität aufweisen, eine übermittelte Datenmenge erfaßt wird. Übermittelte Datenrahmen können sowohl gesendete Datenrahmen als auch empfangene Datenrahmen sein. Des weiteren ist das Kommunikationsgerät dafür ausgestaltet und eingerichtet, daß die übermittelte Datenmenge periodisch innerhalb zumindest eines Überwachungszyklus erfaßt wird. Dabei umfaßt der Überwachungszyklus vorzugsweise eine Vielzahl von Datenrahmen. Darüber hinaus ist das Kommunikationsgerät dafür ausgestaltet und eingerichtet, daß die für jeden Überwachungszyklusdurchlauf erfaßte Datenmenge auf eine Überschreitung eines vorgebbaren Mengenschwellwerts überprüft wird. Außerdem ist das erfindungsgemäße Kommunikationsgerät dafür ausgestaltet und eingerichtet ist, daß der ausgewählte Anschluß bei einer Überschreitung des Mengenschwellwerts für einen Überwachungszyklusdurchlauf während einer Sperrzeit bis zu einem Ende des jeweiligen Überachungszyklusdurchlaufs gegen eine Übermittlung von Datenrahmen mit einer über dem Prioritätsschwellwert liegenden Übermittlungspriorität gesperrt wird. Insgesamt ermöglicht das erfindungsgemäße Kommunikationsgerät, das beispielsweise ein in einem als Store and Forward bezeichneten Übertragungsmodus betriebener Switch oder eine Bridge sein kann, eine im wesentlichen verzögerungsfreie Übermittlung kurzer Datenrahmen mit Echtzeitanforderungen sowie eine effizientere Ressourcennutzung durch Vermeidung von bisher üblichen Zwangspausen nach Übermittlung jedes einzelnen Datenrahmens.

Vorzugsweise ist das Kommunikationsgerät dafür ausgestaltet und eingerichtet, daß während der Sperrzeit am Kommunikationsgerät empfangene Datenrahmen verworfen werden, die für den ausgewählten Anschluß bestimmt sind und eine über dem Prioritätsschwellwert liegende Übermittlungspriorität aufweisen. Entsprechend einer weiteren vorteilhaften Ausgestaltung kann das Kommunikationsgerät dafür ausgestaltet und eingerichtet sein, daß während der Sperrzeit nur Datenrahmen übermittelt werden, die eine unter dem Prioritätsschwellwert liegende Übermittlungspriorität aufweisen. Auf diese Weise wird eine Blockierung niedrigpriorisierten Datenverkehrs vermieden.

Entsprechend einer bevorzugten Ausführungsform ist das Kommunikationsgerät dafür ausgestaltet und eingerichtet, daß die übermittelte Datenmenge periodisch innerhalb zumindest eines ersten Überwachungszyklus und eines gegenüber diesem zeitversetzten zweiten Überwachungszyklus erfaßt wird. Dabei umfassen der erste und der zweite Überwachungszyklus jeweils eine Vielzahl von Datenrahmen. Durch Ausnutzung von Wissen über einen bereits erfolgten, zurückliegenden Bandbreitenverbrauch kann damit eine genauere und selektivere Bandbreitenbegrenzung realisiert werden.

Des weiteren kann das Kommunikationsgerät dafür ausgestaltet und eingerichtet sein, daß die erfaßte Datenmenge jeweils zu Beginn eines jeden Überwachungszyklusdurchlaufs zurückgesetzt wird. Alternativ dazu kann das Kommunikationsgerät dafür ausgestaltet und eingerichtet sein, daß die erfaßte Datenmenge über sämtliche Überwachungszyklusdurchläufe kontinuierlich fortgeschrieben wird. In diesem Fall ist das Kommunikationsgerät zusätzlich dafür ausgestaltet und eingerichtet ist, daß für jeden Überwachungszyklusdurchlauf jeweils eine aktuell erfaßte Datenmenge auf Überschreitung eines angepaßten Mengenschwellwerts überwacht wird, der aus einer Summe des vorgebbaren Mengenschwellwerts und einer zu Beginn des jeweiligen Überwachungszyklusdurchlaufs erfaßten Datenmenge gebildet wird. Damit sind im Rahmen einer Datenmengenüberwachung lediglich für einen späteren Vergleich herangezogene Anfangswerte zu Beginn eines Überwachungszyklusdurchlaufs temporär zu speichern.

Entsprechend einer alternativen Ausführungsform ist das Kommunikationsgerät dafür ausgestaltet und eingerichtet ist, daß die übermittelte Datenmenge anstelle einer periodischen Erfassung innerhalb zumindest eines Überwachungszyklus innerhalb eines zeitlich stetig verschobenen Überwachungsintervalls erfaßt wird. In analoger Weise umfaßt das Überwachungsintervall vorzugsweise eine Vielzahl von Datenrahmen. Darüber ist das Kommunikationsgerät entsprechend der alternativen Ausführungsform zusätzlich dafür ausgestaltet und eingerichtet ist, daß die innerhalb des zeitlich stetig verschobenen Überwachungsintervalls erfaßte Datenmenge auf eine Überschreitung des vorgebbaren Mengenschwellwerts überprüft wird. In entsprechender Weise ist das Kommunikationsgerät in diesem Fall dafür ausgestaltet und eingerichtet ist, daß der ausgewählte Anschluß bei einer Überschreitung des Mengenschwellwerts während einer vorgebbaren Sperrzeit gegen eine Übermittlung von Datenrahmen mit einer über dem Prioritätsschwellwert liegenden Übermittlungspriorität gesperrt wird. Anstelle mehrerer zueinander zeitversetzter Überwachungszyklen kann also ein gleitendes Überwachungsintervall zur Berücksichtigung von bereits erfolgtem, zurückliegendem Bandbreitenverbrauch für effiziente eine Bandbreitenüberwachung bzw. -begrenzung verwendet werden.

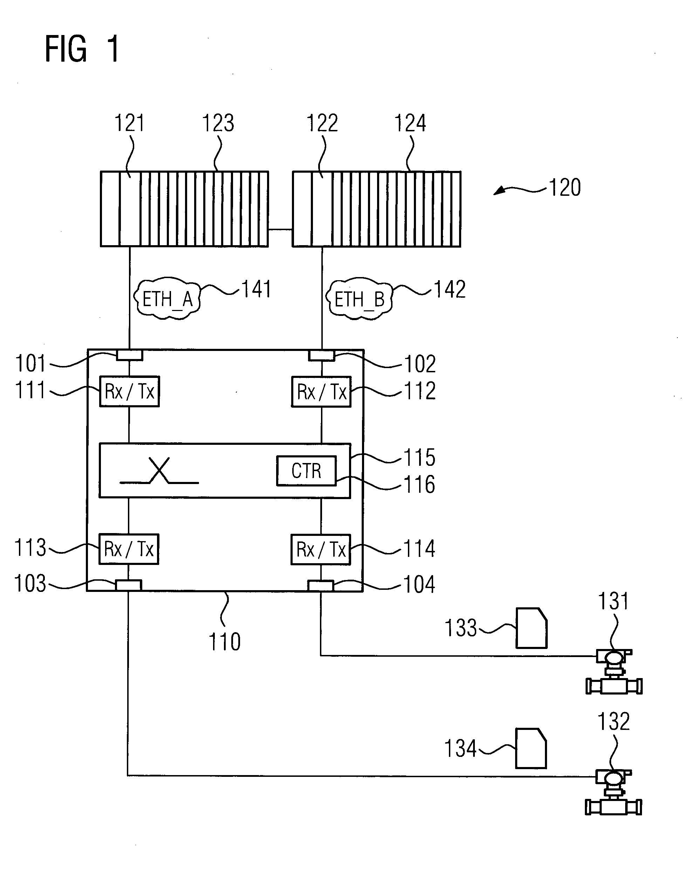

Die vorliegende Erfindung wird nachfolgend an einem Ausführungsbeispiel anhand der Zeichnung näher erläutert. Es zeigt
- Figur 1: ein industrielles Automatisierungssystem mit einer hochverfügbaren Steuerungseinheit, zwei einfach an ein industrielles Kommunikationsnetz angebundenen Feldgeräten und einem die Feldgeräte mit der Steuerungseinheit verbindenden Switch,
- Figur 2: eine schematische Darstellung einer Datenmengenüberwachung mittels mehrerer zeitlich zueinander versetzter Überwachungszyklen, bei denen eine erfaßte Datenmenge jeweils zu Beginn eines jeden Überwachungszyklusdurchlaufs zurückgesetzt wird,
- Figur 3: eine schematische Darstellung einer Datenmengenüberwachung mittels mehrerer zeitlich zueinander versetzter Überwachungszyklen, bei denen die erfaßte Datenmenge über sämtliche Überwachungszyklusdurchläufe kontinuierlich fortgeschrieben wird,
- Figur 4: eine schematische Darstellung einer Datenmengenüberwachung mittels eines zeitlich kontinuierlich verschobenen Überwachungsintervalls.

Das in der Figur dargestellte industrielle Automatisierungssystem umfaßt eine ausfallgesicherte Steuerungseinheit 120 mit einem Primär-Steuerungsgerät 121 und einem Sekundär-Steuerungsgerät 122. Das Primär-Steuerungsgerät 121 und das Sekundär-Steuerungsgerät 122 sind vollständig zueinander redundant und an separate Ethernet-Netze 141, 142 angebunden. Dabei sind Kommunikationseinheiten 123, 124 des Primär-Steuerungsgeräts 121 und des Sekundär-Steuerungsgeräts 122 unterschiedliche MAC- und IP-Adressen zugeordnet.

Darüber hinaus umfaßt das industrielle Automatisierungssystem zwei zueinander redundante Feldgeräte 131, 132, die jeweils eine integrierte Kommunikationseinheit aufweisen und über einen Switch 110 mit der ausfallgesicherten Steuerungseinheit 120 verbunden sind. Der Switch 110 umfaßt im vorliegenden Ausführungsbeispiel eine erste 111 und zweite steuerungsgeräteseitigen Sende- und Empfangseinheit 112, die jeweils einen Anschluß 101, 102 für eine Kommunikationsverbindung mit einem Steuerungsgerät 121, 122 aufweisen. Zusätzlich sind eine dritte 113 und vierte feldgeräteseitige Sende- und Empfangseinheit 114 vorgesehen, die jeweils einen Anschluß 103, 104 für eine Kommunikationsverbindung mit einem Feldgerät 131, 132 aufweisen. Die Sende- und Empfangseinheiten 111-114 sind über einen Backplane Switch 115 mit zugeordnetem Controller 116 steuerbar miteinander verbunden. Mittels des Switchs 110 zu übermittelnden Datenrahmen 133, 134 ist jeweils eine Übermittlungspriorität zugeordnet, die beispielsweise anhand von Merkmalen eines Datenrahmens, wie verwendeter Ethertype, ermittelt werden kann.

Der Controller 116 ist insbesondere dafür ausgestaltet und eingerichtet, daß für über zumindest einen überwachten Anschluß 101-104 des Switchs 110 übermittelte Datenrahmen 133, 134, die eine über einem vorgebbaren Prioritätsschwellwert liegende Übermittlungspriorität aufweisen, eine übermittelte Datenmenge erfaßt wird.

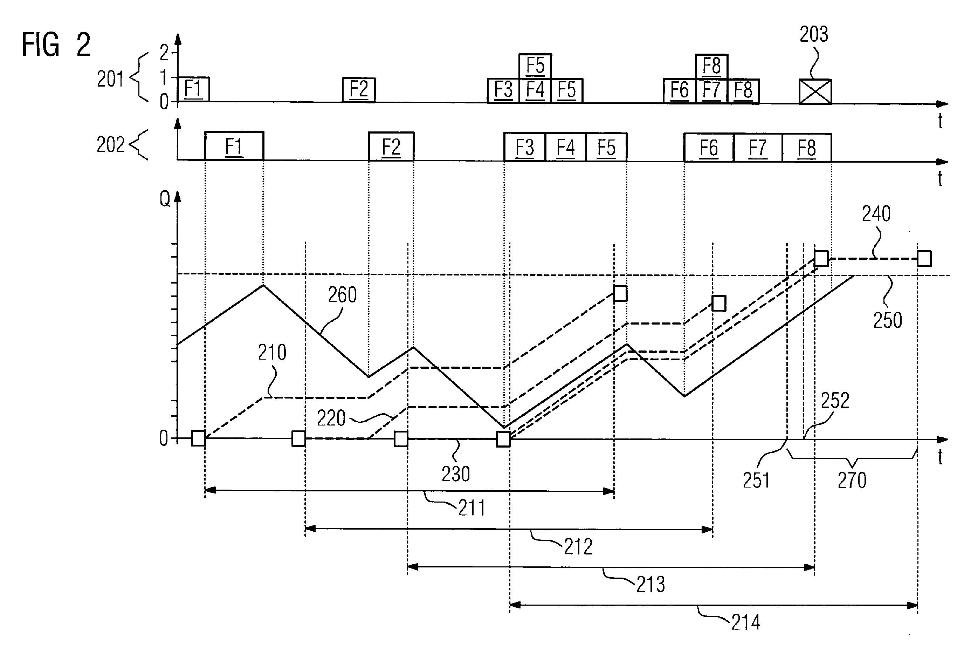

Entsprechend Figur 2 wird die übermittelte Datenmenge 210, 220, 230, 240 periodisch innerhalb mehrerer Überwachungszyklen 211-214 erfaßt, die jeweils zeitlich zueinander versetzt sind und im vorliegenden Ausführungsbeispiel zeitlich jeweils eine Vielzahl von Datenrahmen F1-F8 umfassen. Zu Beginn eines jeden Durchlaufs der Überwachungszyklen 211-214 wird die erfaßte Datenmenge 210, 220, 230, 240 jeweils auf null zurückgesetzt. In Figur 2 sind sowohl einer Eingangswarteschlange an einem überwachten Anschluß zugeordnete Datenrahmen 201 als auch aus der Eingangswarteschlange hervorgehende gesendete Datenrahmen 202 dargestellt, wobei der Switch in einem als Store and Forward bezeichneten Übertragungsmodus betrieben wird. Durch jeden dieser gesendeten Datenrahmen 202 erhöht sich entsprechend seiner Länge die im Rahmen der Überwachungszyklen 211-214 erfaßte Datenmenge 210, 220, 230, 240. Als Referenzverlauf ist in Figur 2 zusätzlich eine entsprechend credit-based shaper erfaßte Datenmenge 260 dargestellt.

Die für jeden Durchlauf eines der Überwachungszyklen 211-214 erfaßte Datenmenge 210, 220, 230, 240 wird fortlaufend auf eine Überschreitung eines vorgebbaren Mengenschwellwerts 250 überprüft, der einer dem überwachten Anschluß zugeordneten maximalen Bandbreite entspricht. Bei einer Überschreitung des Mengenschwellwerts 250 für einen Überwachungszyklusdurchlauf wird der überwachte Anschluß während einer Sperrzeit bis zu einem Ende des jeweiligen Überwachungszyklusdurchlaufs gegen eine Übermittlung von Datenrahmen mit einer über dem Prioritätsschwellwert liegenden Übermittlungspriorität gesperrt. Im vorliegenden Ausführungsbeispiel kommt es für die Überwachungszyklen 213, 214 zu einer Überschreitung 251, 252 des Mengenschwellwerts 250. Dementsprechend wird ein während einer resultierenden Sperrzeit 270 am überwachten Anschluß empfangener Datenrahmen 203 verworfen, der eine über dem Prioritätsschwellwert liegende Übermittlungspriorität aufweist. Während der Sperrzeit können dagegen Datenrahmen übermittelt werden, die eine unter dem Prioritätsschwellwert liegende Übermittlungspriorität aufweisen.

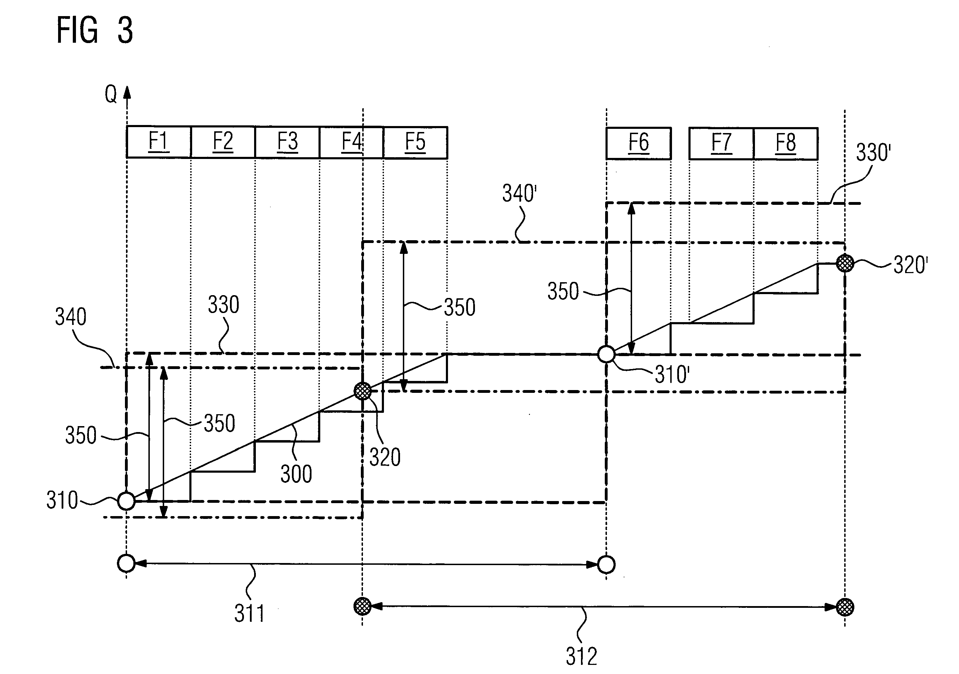

Entsprechend dem in Figur 3 dargestellten Ausführungsbeispiel wird die erfaßte Datenmenge 300 über sämtliche Überwachungszyklen 311, 312 kontinuierlich fortgeschrieben. Dabei wird für jeden Überwachungszyklusdurchlauf jeweils eine aktuell erfaßte Datenmenge 300 auf Überschreitung eines angepaßten Mengenschwellwerts 330, 330', 340, 340' überwacht wird, der aus einer Summe des vorgebbaren Mengenschwellwerts 350 und einer zu Beginn des jeweiligen Überwachungszyklusdurchlaufs erfaßten Datenmenge 310, 310', 320, 320' gebildet wird. Damit müssen für eine Bandbreitenüberwachung lediglich Anfangswerte der erfaßten Datenmenge 300 zu Beginn des jeweiligen Überwachungszyklusdurchlaufs gespeichert werden. Anhand von Figur 3 ist erkennbar, daß die übermittelte Datenmenge sowohl innerhalb eines im wesentlichen kontinuierlichen Wertebereichs als auch in diskreten Wertestufen erfaßt werden kann. Eine Erfassung in diskreten Wertestufen kann beispielsweise mittels eines Zählers erfolgen.

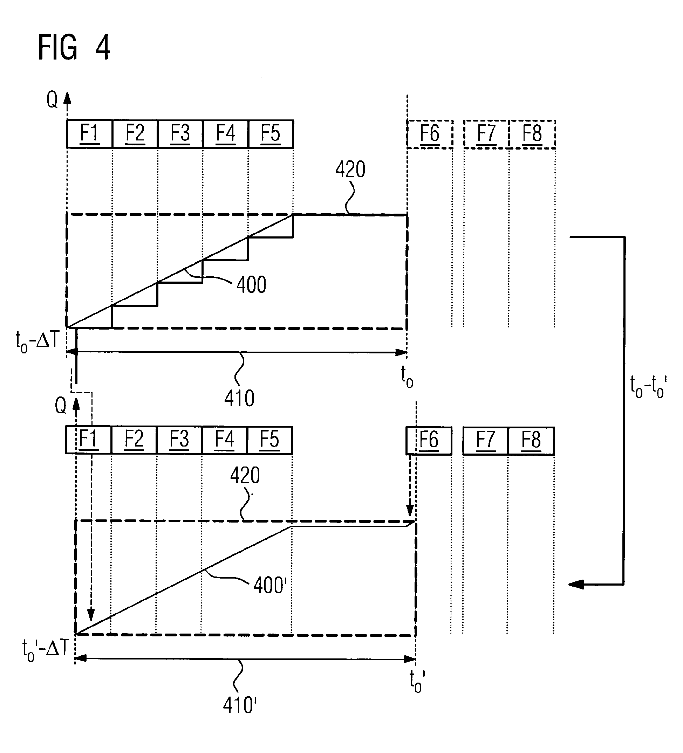

In Figur 4 ist ein alternatives Ausführungsbeispiel dargestellt, bei dem die übermittelte Datenmenge 400, 400' anstelle einer periodischen Erfassung innerhalb von Überwachungszyklen innerhalb eines zeitlich kontinuierlich verschobenen Überwachungsintervalls 410, 410' erfaßt wird. In Analogie zu vorangehenden Ausführungen umfaßt das Überwachungsintervall 410, 410' eine Vielzahl von Datenrahmen F1-F8 und erstreckt sich von einem Gegenwartszeitpunkt t₀, t₀' bis zu einem Vergangenheitszeitpunkt t₀-ΔT, t₀'-ΔT. Die innerhalb des zeitlich kontinuierlich verschobenen Überwachungsintervalls 410, 410' erfaßte Datenmenge 400, 400' wird dementsprechend fortlaufend auf eine Überschreitung des vorgebbaren Mengenschwellwerts 420 überprüft. Bei einer Überschreitung des Mengenschwellwerts 420 wird der überwachte Anschluß während einer vorgebbaren Sperrzeit gegen eine Übermittlung von Datenrahmen mit einer über dem Prioritätsschwellwert liegenden Übermittlungspriorität gesperrt. Durch beschriebene Verschiebung des Überwachungsintervalls erfährt die erfaßte Datenmenge aufgrund einer selektiven Einbeziehung eines relativen Vergangenheitsverlaufs eine fortlaufende Anpassung. Auf diese Weise können potentielle Bandbreitenüberschreitungen zuverlässig erkannt werden.

## Patentansprüche

1. Verfahren zur Übermittlung von Datenrahmen mittels eines Kommunikationsgeräts eines industriellen Automatisierungssystems, bei dem
- mittels des Kommunikationsgeräts zu übermittelnden Datenrahmen jeweils eine Übermittlungspriorität zugeordnet ist,
- für über zumindest einen ausgewählten Anschluß des Kommunikationsgeräts übermittelte Datenrahmen, die eine über einem vorgebbaren Prioritätsschwellwert liegende Übermittlungspriorität aufweisen, eine übermittelte Datenmenge erfaßt wird,
- die übermittelte Datenmenge periodisch innerhalb zumindest eines Überwachungszyklus erfaßt wird, wobei der Überwachungszyklus eine Vielzahl von Datenrahmen umfassen kann,
- die für jeden Überwachungszyklusdurchlauf erfaßte Datenmenge auf eine Überschreitung eines vorgebbaren Mengenschwellwerts überprüft wird,
- der ausgewählte Anschluß bei einer Überschreitung des Mengenschwellwerts für einen Überwachungszyklusdurchlauf während einer Sperrzeit bis zu einem Ende des jeweiligen Überachungszyklusdurchlaufs gegen eine Übermittlung von Datenrahmen mit einer über dem Prioritätsschwellwert liegenden Übermittlungspriorität gesperrt wird.

2. Verfahren nach Anspruch 1,
bei dem während der Sperrzeit am Kommunikationsgerät empfangene Datenrahmen verworfen werden, die für den ausgewählten Anschluß bestimmt sind und eine über dem Prioritätsschwellwert liegende Übermittlungspriorität aufweisen.

3. Verfahren nach einem der Ansprüche 1 oder 2,
bei dem während der Sperrzeit nur Datenrahmen übermittelt werden, die eine unter dem Prioritätsschwellwert liegende Übermittlungspriorität aufweisen.

4. Verfahren nach einem der Ansprüche 1 bis 3,
bei dem die übermittelte Datenmenge periodisch innerhalb zumindest eines ersten Überwachungszyklus und eines gegenüber diesem zeitversetzten zweiten Überwachungszyklus erfaßt wird, wobei der erste und der zweite Überwachungszyklus jeweils eine Vielzahl von Datenrahmen umfassen.

5. Verfahren nach einem der Ansprüche 1 bis 4,
bei dem die erfaßte Datenmenge jeweils zu Beginn eines jeden Überwachungszyklusdurchlaufs zurückgesetzt wird.

6. Verfahren nach einem der Ansprüche 1 bis 4,
bei dem die erfaßte Datenmenge über sämtliche Überwachungszyklusdurchläufe kontinuierlich fortgeschrieben wird, und bei dem für jeden Überwachungszyklusdurchlauf jeweils eine aktuell erfaßte Datenmenge auf Überschreitung eines angepaßten Mengenschwellwerts überwacht wird, der aus einer Summe des vorgebbaren Mengenschwellwerts und einer zu Beginn des jeweiligen Überwachungszyklusdurchlaufs erfaßten Datenmenge gebildet wird.

7. Verfahren nach einem der Ansprüche 1 bis 3,
bei dem die übermittelte Datenmenge anstelle einer periodischen Erfassung innerhalb zumindest eines Überwachungszyklus innerhalb eines zeitlich stetig verschobenen Überwachungsintervalls erfaßt wird, wobei das Überwachungsintervall eine Vielzahl von Datenrahmen umfassen kann, und bei dem die innerhalb des zeitlich stetig verschobenen Überwachungsintervalls erfaßte Datenmenge auf eine Überschreitung des vorgebbaren Mengenschwellwerts überprüft wird, und bei dem der ausgewählte Anschluß bei einer Überschreitung des Mengenschwellwerts während einer vorgebbaren Sperrzeit gegen eine Übermittlung von Datenrahmen mit einer über dem Prioritätsschwellwert liegenden Übermittlungspriorität gesperrt wird.

8. Verfahren nach Anspruch 7,
bei dem die erfaßte Datenmenge nur innerhalb des zeitlich stetig verschobenen Überwachungsintervalls übermittelte Datenrahmen umfaßt.

9. Verfahren nach einem der Ansprüche 7 oder 8,
bei dem das Überwachungsintervall zeitlich kontinuierlich oder in diskreten Zeitabständen verschoben wird.

10. Verfahren nach einem der Ansprüche 1 bis 9,
bei dem die übermittelte Datenmenge innerhalb eines (quasi-)kontinuierlichen Wertebereichs oder mittels eines Zählers in Wertestufen erfaßt wird.

11. Verfahren nach einem der Ansprüche 1 bis 10,
bei dem das Kommunikationsgerät in einem als Store and Forward bezeichneten Übertragungsmodus betrieben wird.

12. Kommunikationsgerät für ein industrielles Automatisierungssystem zur Durchführung eines Verfahrens nach einem der Ansprüche 1 bis 12
- mit mehreren Anschlüssen für eine Verbindung mit innerhalb eines industriellen Kommunikationsnetzes miteinander verbundenen Kommunikationsgeräten,
- mit einem die Anschlüsse miteinander verbindenden Koppelelement,
- wobei mittels des Kommunikationsgeräts zu übermittelnden Datenrahmen jeweils eine Übermittlungspriorität zugeordnet ist,
- wobei das Kommunikationsgerät dafür ausgestaltet und eingerichtet ist, daß für über zumindest einen ausgewählten Anschluß des Kommunikationsgeräts übermittelte Datenrahmen, die eine über einem vorgebbaren Prioritätsschwellwert liegende Übermittlungspriorität aufweisen, eine übermittelte Datenmenge erfaßt wird,
- wobei das Kommunikationsgerät dafür ausgestaltet und eingerichtet ist, daß die übermittelte Datenmenge periodisch innerhalb zumindest eines Überwachungszyklus erfaßt wird, wobei der Überwachungszyklus eine Vielzahl von Datenrahmen umfassen kann,
- wobei das Kommunikationsgerät dafür ausgestaltet und eingerichtet ist, daß die für jeden Überwachungszyklusdurchlauf erfaßte Datenmenge auf eine Überschreitung eines vorgebbaren Mengenschwellwerts überprüft wird,
- wobei das Kommunikationsgerät dafür ausgestaltet und eingerichtet ist, daß der ausgewählte Anschluß bei einer Überschreitung des Mengenschwellwerts für einen Überwachungszyklusdurchlauf während einer Sperrzeit bis zu einem Ende des jeweiligen Überachungszyklusdurchlaufs gegen eine Übermittlung von Datenrahmen mit einer über dem Prioritätsschwellwert liegenden Übermittlungspriorität gesperrt wird.

13. Kommunikationsgerät nach Anspruch 12,
bei dem das Kommunikationsgerät dafür ausgestaltet und eingerichtet ist, daß während der Sperrzeit am Kommunikationsgerät empfangene Datenrahmen verworfen werden, die für den ausgewählten Anschluß bestimmt sind und eine über dem Prioritätsschwellwert liegende Übermittlungspriorität aufweisen.

14. Kommunikationsgerät nach einem der Ansprüche 12 oder 13, bei dem das Kommunikationsgerät dafür ausgestaltet und eingerichtet ist, daß während der Sperrzeit nur Datenrahmen übermittelt werden, die eine unter dem Prioritätsschwellwert liegende Übermittlungspriorität aufweisen.

15. Kommunikationsgerät nach einem der Ansprüche 12 bis 14, bei dem das Kommunikationsgerät dafür ausgestaltet und eingerichtet ist, daß die übermittelte Datenmenge periodisch innerhalb zumindest eines ersten Überwachungszyklus und eines gegenüber diesem zeitversetzten zweiten Überwachungszyklus erfaßt wird, wobei der erste und der zweite Überwachungszyklus jeweils eine Vielzahl von Datenrahmen umfassen.

16. Kommunikationsgerät nach einem der Ansprüche 12 bis 15, bei dem das Kommunikationsgerät dafür ausgestaltet und eingerichtet ist, daß die erfaßte Datenmenge jeweils zu Beginn eines jeden Überwachungszyklusdurchlaufs zurückgesetzt wird.

17. Kommunikationsgerät nach einem der Ansprüche 12 bis 15, bei dem das Kommunikationsgerät dafür ausgestaltet und eingerichtet ist, daß die erfaßte Datenmenge über sämtliche Überwachungszyklusdurchläufe kontinuierlich fortgeschrieben wird, und bei dem das Kommunikationsgerät dafür ausgestaltet und eingerichtet ist, daß für jeden Überwachungszyklusdurchlauf jeweils eine aktuell erfaßte Datenmenge auf Überschreitung eines angepaßten Mengenschwellwerts überwacht wird, der aus einer Summe des vorgebbaren Mengenschwellwerts und einer zu Beginn des jeweiligen Überwachungszyklusdurchlaufs erfaßten Datenmenge gebildet wird.

18. Kommunikationsgerät nach einem der Ansprüche 12 bis 14, bei dem das Kommunikationsgerät dafür ausgestaltet und eingerichtet ist, daß die übermittelte Datenmenge anstelle einer periodischen Erfassung innerhalb zumindest eines Überwachungszyklus innerhalb eines zeitlich stetig verschobenen Überwachungsintervalls erfaßt wird, wobei das Überwachungsintervall eine Vielzahl von Datenrahmen umfassen kann, und bei dem das Kommunikationsgerät dafür ausgestaltet und eingerichtet ist, daß die innerhalb des zeitlich stetig verschobenen Überwachungsintervalls erfaßte Datenmenge auf eine Überschreitung des vorgebbaren Mengenschwellwerts überprüft wird, und bei dem das Kommunikationsgerät dafür ausgestaltet und eingerichtet ist, daß der ausgewählte Anschluß bei einer Überschreitung des Mengenschwellwerts während einer vorgebbaren Sperrzeit gegen eine Übermittlung von Datenrahmen mit einer über dem Prioritätsschwellwert liegenden Übermittlungspriorität gesperrt wird.
